Europäisches Patentamt

(19) European Patent Office

Office européen des brevets

(11) Publication number: **0 287 374**
**A2**

## EUROPEAN PATENT APPLICATION

(21) Application number: 88303372.2

(22) Date of filing: 14.04.88

(51) Int. Cl.⁴: **B 23 H 5/00**

(30) Priority: 16.04.87 GB 8709236

(43) Date of publication of application:
19.10.88 Bulletin 88/42

(84) Designated Contracting States:
CH DE FR IT LI NL

(71) Applicant: **Rawson, Francis Frederick Hamilton**
**69A Main Street**
**Queniborough Leicester, LE7 8DB (GB)**

(72) Inventor: **Rawson, Francis Frederick Hamilton**
**69A Main Street**
**Queniborough Leicester, LE7 8DB (GB)**

(74) Representative: **Lally, William et al**
**FORRESTER & BOEHMERT Widenmayerstrasse 4/I**
**D-8000 München 22 (DE)**

(54) Device and machine tool for high frequency machining.

(57) A high frequency machining device comprises a housing (4) of generally circular cross-section, having at one end a tapered mounting formation (6) of a shape similar to that provided on a conventional tool holding chuck. Mounted in the housing is an ultrasonic sub-assembly (8) comprising a transducer (10), and a booster device (12), the booster device carrying a horn (14) having a machining tip (15).

The high frequency machining device is designed for use in conjunction with a conventional machine tool comprising a housing (28) in which a rotatable drive spindle (30) is mounted, the spindle (30) carrying at its leading end portion a chuck mounting device (32) provided with a conventional chuck-receiving aperture (34).

In the use of the high frequency machining device a conventional chuck will be removed from the chuck-receiving aperture (34), and the illustrative device will be mounted in the aperture (34) in place of the chuck.

EP 0 287 374 A2

## Description

### "Device and machine tool for high frequency machining"

This invention is concerned with improvements relating to high frequency machining, specifically in performing machining operations involving the use of a tool vibrating at high frequency, typically in the region 10 to 50 kHz. Such machining techniques are frequently used on hard materials, such as metal or ceramics.

High frequency machining is conventionally carried out using a machine comprising a generator to generate high frequency vibrations (conventionally called a transducer), a booster device secured to the generator, and a tool (conventionally called a horn) extending from the booster. The booster is conveniently secured at a nodal point, allowing the horn to vibrate under the influence of the transducer at a desired frequency. The machine additionally comprises means to move the tool along orthoganal axes, as is required during machining operations. Such machines are therefore dedicated to high frequency machining operations.

According to this invention there is provided a high frequency machining device comprising a housing, a high frequency generator in the housing, and a tool secured to the generator, wherein the housing is provided with means to enable it to be secured to the chuck receiving aperture of a machine.

Thus the high frequency maching device may be used in conjunction with an otherwise conventional machine, typically comprising a drive spindle, a chuck mounting device providing a chuck receiving aperture on the spindle, and means to move the spindle both rotationally and linearly as is required for the performance of a machining operation.

During conventional (non-high frequency) operations, a conventional chuck may be mounted in the chuck aperture, the chuck conveniently carrying a tool such as a drill bit or a grinding bit. When it is desired to utilise a high frequency machining operation, the chuck may be removed and the high frequency machining device may be mounted in the chuck receiving aperture.

According to this invention there is also provided a machine tool comprising a housing, a spindle rotatable in the housing, a chuck mounting device providing a chuck receiving aperture capable of receiving a conventional tool holding chuck on the spindle, and means to move the spindle along at least one feed direction, wherein there is mounted in the chuck receiving aperture, a high frequency machining device comprising a housing, a high frequency generator in the housing, and a tool secured to the generator, the housing being provided with means to enable it to be secured into the chuck receiving aperture of the machine.

Preferably the high frequency machining device comprises a cover member, conveniently in the form of a ring, mounted on the housing for rotation thereon about a longitudinal axis, means being provided which is cooperable both with the cover member and with the machine housing to prevent rotation of the cover member in the operation of the machine.

Preferably an electric supply for the high frequency machining device is connected to the cover member, contact means being provided to transmit the supply of electricity through the housing of the device to the generator.

Preferably the high frequency maching device comprises a support member, advantageously releasably secured to the housing, and advantageously adapted to support the tool at or adjacent to a nodal point.

According to this invention there is also provided, in combination, a conventional machine tool comprising a housing, a spindle rotatable in the housing, a chuck mounting device providing a chuck receiving aperture capable of receiving a conventional tool holding chuck on the spindle, and means to move the spindle along at least one feed direction, and a high frequency machining device comprising a housing, a high frequency generator in the housing, and a tool secured to the generator, means being provided to enable the high frequency machining device to be mounted on the machine.

There will now be given a detailed description, to be read with reference to the accompanying drawings, of a high frequency machining device which is a preferred embodiment of this invention, having been selected for the purposes of illustrating the invention by way of example.

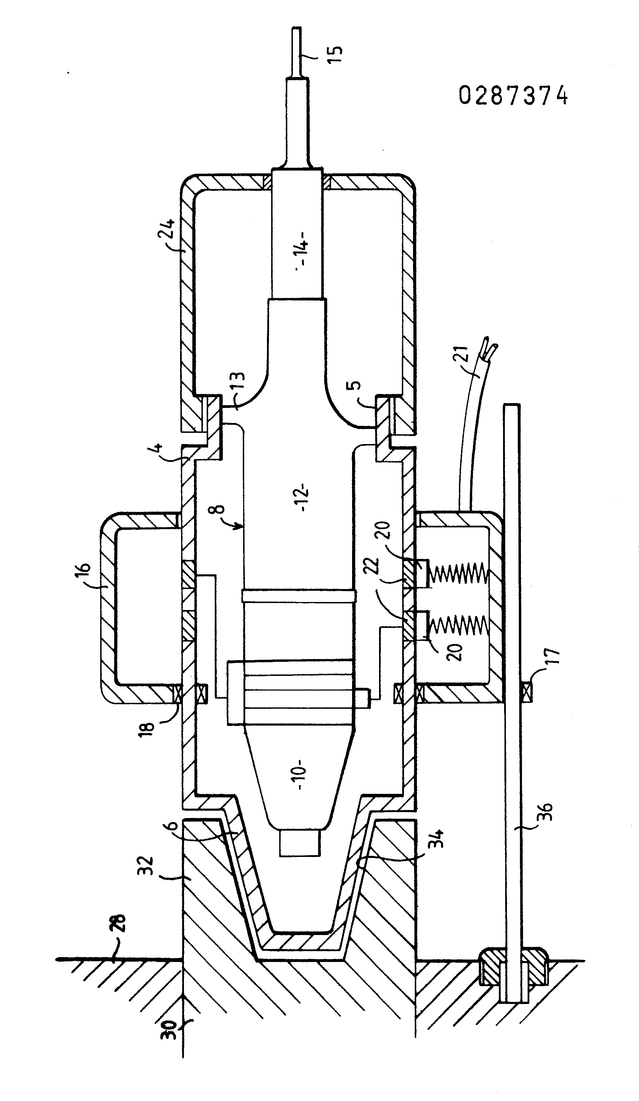

The accompanying drawing is a schematic sectional view of the preferred embodiment.

The high frequency machining device which is the preferred embodiment of this invention comprises a housing 4 of generally circular cross-section, having at one end a tapered mounting formation 6 of a shape similar to that provided on a conventional tool holding chuck.

Mounted in the housing is a high frequency generator provided by sub-assembly 8 comprising a transducer 10, a booster device 12, secured by a flange 13 to the housing 4, the booster device 12 carrying a horn 14 having a machining tip 15.

The device comprises a cover member 16 in the form of ring secured to the housing 4 by a ring bearing 18, the cover member 16 carrying a pair of spring-loaded fixed contacts 20 to which a supply 21 of electricity is connected. The fixed contacts 20 are urged into contact with a pair of ring contacts 22 secured to the housing, from which a supply of electricity is transmitted to the transducer 10.

Secured to the housing 4 at a ring-shaped portion 5 thereof is a support member 24, provided with a circular aperture adapted to lightly engage the horn 14 at a nodal point thereof, to support the horn during the performance of machining operation

The high frequency machining device which is the preferred embodiment of this invention is specifically designed for use in conjunction with a conventional machine tool, typically comprising a housing 28 in which a rotatable drive spindle 30 is mounted, the spindle 30 carrying at its leading end portion a chuck mounting device 32 provided with a chuck receiving aperture 34. In the conventional use of the machine, a conventional chuck carrying a tool such as a drill bit or a grinding bit will be mounted in the chuck receiving aperture, and the spindle will be rotatated, and driven in at least one linear direction, for the performance of a machining operation. Thus the machine may be a simple drilling machine, in which the spindle is capable of linear movement only in the axial direction, or may be a numerically controlled machine in which the spindle is capable of linear movement in three orthogonal axes.

In the use of the high frequency maching device which is the preferred embodiment of this invention, a conventional chuck will be removed from the chuck receiving aperture 34, and the illustrative device will be mounted in the aperture 34 in place of the chuck.

Cooperative between the cover member 16 and the housing 28 is a tie rod 36 which extends through an aperture provided in a formation 17 of the cover member, to prevent on rotation of the spindle 30 rotation of the cover member 16, the tie rod 36 being sufficiently elongate to accommodate the maximum extent of linear axial movement of the drive spindle.

Thus on rotation of the drive spindle the illustrative device is rotated, and a supply of electricity delivered through the cover member 16 by way of the contacts 20, 22 to the transducer 10, causing the horn 14 to vibrate at a desired frequency

When it is necessary to change the tool 14, the support member 24 may be unscrewed from the housing 4, and the horn replaced, an alternative support member 24 being used which engages the horn 14 at an appropriate nodal point

The features disclosed in the foregoing description, or the following claims, or the accompanying drawings, expressed in their specific forms or in terms of a means for performing the disclosed function, or a method or process for attaining the disclosed result, or a class or group of substances or compositions, as appropriate, may, separately or in any combination of such features, be utilised for realising the invention in diverse forms thereof.

**Claims**

1. A high frequency machining device comprising a housing (4), a high frequency generator (8) in the housing, and a tool (14, 15) secured to the generator, wherein the housing is provided with means (6) to enable it to be secured to the chuck-receiving aperture (34) of a machine.

2. A machine tool comprising a housing (28), a spindle (30) rotatable within the housing, a chuck mounting device (32) providing a chuck-receiving aperture (34) capable of receiving a conventional tool holding chuck on the spindle, and means to move the spindle along at least one feed direction, wherein there is mounted in the chuck-receiving aperture (34) a high frequency machining device comprising a housing (4), a high frequency generator (8) in the housing, and a tool (14, 15) secured to the generator, the housing being provided with means (6) to enable it to be secured into the chuck-receiving aperture (34) of the machine.

3. The invention according to one of Claims 1 and 2 wherein the high frequency machining device comprises a cover member (16) mounted on the housing (4) for rotation thereon about a longitudinal axis.

4. The invention according to Claim 3 wherein the cover member (16) is in the form of a ring.

5. The invention according to one of Claims 3 and 4 wherein means (36, 17) is provided which is cooperable both with the cover member (16) and with the machine housing (28) to prevent rotation of the cover member in the operation of the machine

6. The invention according to one of Claims 3 to 5 wherein an electric supply (21) for the high frequency machining device is connected to the cover member (16), contact means (20, 22) being provided to transmit the supply of electricity through the housing of the device to the generator (8).

7. The invention according to any one of the preceding claims wherein the high frequency machining device comprises a support means (24, 13, 5) adapted to support the tool (14, 15) at or adjacent to a nodal point.

8. The invention according to Claim 7 wherein the support means comprises a member (24) releasably secured to the housing.

9. In combination, a machine tool comprising a housing (28), a spindle (30) rotatable in the housing, a chuck mounting device (32) providing a chuck-receiving aperture (34) cable of receiving a conventional tool holding chuck on the spindle, and means to move the spindle along at least one feed direction, and a high frequency machining device comprising a housing (4), a high frequency generator (8) in the housing, and a tool (14, 15) secured to the generator, means (6, 34) being provided to enable the high frequency machining device to be mounted on the machine.

10. The combination according to Claim 9 wherein the high frequency machining device is provided with means (6, 34) to enable it to be secured to the machine tool in the chuck-receiving aperture (34) thereof.

0287374